# EUROPÄISCHE PATENTANMELDUNG

(11) **EP 0 751 190 A1**
(43) Veröffentlichungstag der Anmeldung: **02.01.1997**
(21) Anmeldenummer: 96109835.7
(22) Anmeldetag: 19.06.1996
(51) Int. Cl.: C09B 67/46, C09B 67/20, C09D 11/02

(54) **Farbstoffpräparationen, enthaltend Ethylenoxid-Ricinusöl-Umsetzungsprodukte**

(30) Priorität: 28.06.1995 DE 19523464
(71) Anmelder: BASF Aktiengesellschaft, 67063 Ludwigshafen (DE)
(72) Erfinder: Swatzina, Dieter, 67063 Ludwigshafen (DE); Beck, Karin Heidrun, Dr., 67067 Ludwigshafen (DE); Vamvakaris, Christos, Dr., 67169 Kallstadt (DE); Krüsemann, Juliane, 67069 Ludwigshafen (DE)

(57) **Zusammenfassung**

Farbstoffpräparationen, enthaltend einen oder mehrere Farbstoffe, die keine wasserlöslichmachenden Gruppen im Molekül aufweisen und aus der Klasse der Metallkomplex-Azofarbstoffe oder der Metallphthalocyanine stammen, und Umsetzungsprodukte von 1 bis 50 mol Ethylenoxid und 1 mol Ricinusöl, deren Verwendung zum Färben von körnigen oder pulvrigen Substraten, wäßrige Farbstoffpräparationen, die die obengenannten Farbstoffpräparationen zur Grundlage haben, sowie deren Verwendung in Druckfarben.

## Beschreibung

Gegenstand der vorliegenden Erfindung sind Farbstoffpräparationen, enthaltend, jeweils bezogen auf das Gewicht der Präparation, 0,01 bis 50 Gew.-% eines oder mehrerer Farbstoffe, die keine wasserlöslichmachenden Gruppen im Molekül aufweisen und aus der Klasse der Metallkomplex-Azofarbstoffe oder der Metallphthalocyanine stammen, und 50 bis 99,99 Gew.-% eines Umsetzungsprodukts von 1 bis 50 mol Ethylenoxid und 1 mol Ricinusöl, deren Verwendung zum Färben von wäßrigen oder pulvrigen Substraten, wäßrige Farbstoffpräparationen, die die obengenannten Farbstoffpräparationen zur Grundlage haben, sowie deren Verwendung in Druckfarben.

Aus der JP-A-275 678/1989 sind Farbmittelpräparationen bekannt, enthaltend Farbstoffe oder Pigmente sowie u.a. 0,5 bis 5 Gew.-%, bezogen auf das Gewicht der Farbmittelpräparationen, eines Umsetzungsprodukts von Ethylenoxid und Ricinusöl. Diese Farbmittelpräparationen dienen als Kugelschreiberpasten.

Aufgabe der vorliegenden Erfindung war es, neue lösungsmittelfreie Farbstoffpräparationen von in Wasser nahezu unlöslichen Farbstoffen aus der Reihe der Metallkomplex-Azofarbstoffe oder der Metallphthalocyanine bereitzustellen. Die neuen Farbstoffpräparationen sollten sich in vorteilhafter Weise zum Färben von körnigen oder pulvrigen Substraten eignen. Außerdem sollten aus ihnen in einfacher Weise wäßrige Farbstoffpräparationen zu erhalten sein, die wiederum in lösungsmittelfreien Druckfarben zur Anwendung gelangen sollten, wobei die Druckfarben gute Gebrauchseigenschaften aufweisen sollten.

Demgemäß wurden die eingangs näher bezeichneten Farbstoffpräparationen gefunden.

Alle in den jeweiligen Farbstoffpräparationen aufgeführten Werte an Gew.-% sind selbstverständlich so zu verstehen, daß sie in der Summe 100 Gew.-% ergeben.

Die in den erfindungsgemäßen Farbstoffpräparationen enthaltenen Farbstoffe weisen keine wasserlöslichmachenden Gruppen im Molekül auf. Darunter sind insbesondere Hydroxysulfonyl- oder Carboxylgruppen zu verstehen.

Solche in Wasser nahezu unlöslichen Farbstoffe stammen aus der Klasse der Metallkomplex-Azofarbstoffe oder Metallphthalocyanine, wobei die Metallkomplex-Azofarbstoffe hervorzuheben sind.

Unter Metallkomplex-Azofarbstoffen sind sowohl symmetrische oder unsymmetrische 1 : 2-Metallkomplex-Azofarbstoffe als auch 1 : 1-Metallkomplex-Azofarbstoffe zu verstehen. Geeignete komplexierende Metalle sind z.B. Eisen, Nickel, Chrom oder Kobalt.

Die Verwendung von Chromkomplex-Azofarbstoffen, insbesondere von symmetrischen oder unsymmetrischen 1:2-Chromkomplex-Azofarbstoffen als Farbmittel in den erfindungsgemäßen Farbstoffpräparationen ist bevorzugt.

Geeignete Metallphthalocyanine sind z.B. die Kupfer- oder Nickelphthalocyanine. Die Verwendung von Kupferphthalocyaninen ist bevorzugt.

Die genannten Farbstoffe sind in der Regel bekannt und handelsüblich. Sie sind im Colour Index unter dem Begriff C.I. Solvent Dyes beschrieben.

Beispielhaft sind die Farbstoffe C.I. Solvent Yellow 19 (13900:1), C.I. Solvent Yellow 25, C.I. Solvent Yellow 32 (48045), C.I. Solvent Yellow 79, C.I. Solvent Yellow 81, C.I. Solvent Yellow 82, C.I. Solvent Orange 54, C.I. Solvent Orange 56, C.I. Solvent Orange 99, C.I. Solvent Brown 42, C.I. Solvent Red 109, C.I. Solvent Red 118, C.I. Solvent Red 119, C.I. Solvent Red 122, C.I. Solvent Red 127, C.I. Solvent Red 160, C.I. Solvent Blue 70, C.I. Solvent Black 27, C.I. Solvent Black 29 oder C.I. Solvent Black 35 (12 195/12 197) zu nennen.

Bei den Umsetzungsprodukten von Ethylenoxid mit Ricinusöl handelt es sich ebenfalls um an sich bekannte Produkte. Sie finden in der Regel als Tenside oder Emulgatoren Anwendung.

Sie sind handelsüblich und z.B. in K. Lindner, "Tenside-Textilhilfsmittel-Waschrohstoffe", Band 1, Seite 902, Wissenschaftliche Verlagsgesellschaft mbH, Stuttgart, 1964, beschrieben. Ein besonders geeignetes Produkt ist. z.B. unter der Markenbezeichnung Cremophor® EL (BASF Aktiengesellschaft) handelsüblich.

Bevorzugt wendet man Umsetzungsprodukte von 10 bis 40 mol Ethylenoxid mit 1 mol Ricinusöl an.

Besonders bevorzugt ist die Verwendung eines Umsetzungsprodukts von 35 mol Ethylenoxid und 1 mol Ricinusöl.

Da Ricinusöl im wesentlichen aus dem Glycerid der Ricinolsäure besteht (80 bis 85 %) und daneben noch in untergeordneten Mengen Glyceride der Ölsäure (7 %), Linolsäure (3 %), Palmitinsäure (2 %) und Stearinsäure (1 %) enthält, ist der Hauptbestandteil des Umsetzungsproduktes von Ethylenoxid und Ricinusöl Glycerinpolyoxyethylenricinoleat. Nebenbestandteile sind Polyoxyethylenester der genannten Fettsäuren, Polyethylenglykole und Glycerinethoxylat.

Die obengenannte Angabe 1 mol Ricinusöl bezieht sich auf die Anzahl der im Ricinusöl vorhandenen Hydroxygruppen, die von der Ricinolsäure stammen.

Bevorzugt sind Farbstoffpräparationen, enthaltend 1 bis 30 Gew.-% an Farbstoff und 70 bis 99 Gew.-% Umsetzungsprodukt von Ethylenoxid und Ricinusöl.

Die erfindungsgemäßen Farbstoffpräparationen können vorteilhaft durch Lösen der Farbstoffe in den Umsetzungsprodukten von Ethylenoxid und Ricinusöl bei einer Temperatur von 30 bis 95°C erhalten werden.

Sie eignen sich vorteilhaft zum Färben von körnigen oder pulvrigen Substraten. Besonders hervorzuheben ist die Einfärbung von Düngemitteln oder Saatgut.

Durch Zusatz von Wasser gelangt man zu den obengenannten wäßrigen Farbstoffpräparationen. Diese wäßrigen Farbstoffpräparationen, die ein weiterer Gegenstand der vorliegenden Erfindung sind, enthalten, jeweils bezogen auf das Gesamtgewicht der Präparation, 1 bis 50 Gew.-% der eingangs näher bezeichneten Farbstoffpräparation und 50 bis 99 Gew.-% Wasser.

Bevorzugt sind wäßrige Farbstoffpräparationen, enthaltend 1 bis 40 Gew.-% der eingangs näher bezeichneten Farbstoffpräparation und 60 bis 99 Gew.-% Wasser.

Wie oben bereits erwähnt, können die erfindungsgemäßen wäßrigen Farbstoffpräparationen vorteilhaft erhalten werden, indem man die eingangs näher bezeichneten Farbstoffpräparationen und Wasser im erfindungsgemäßen Verhältnis mischt.

Die neuen wäßrigen Farbstoffpräparationen eignen sich in vorteilhafter Weise zur Verwendung in Druckfarben auf Wasserbasis.

Zu diesem Zweck können den erfindungsgemäßen wäßrigen Farbstoffpräparationen die für Druckfarben üblichen Hilfsmittel, wie Bindemittel, z.B. auf Polyurethanbasis, zugesetzt werden.

Die unter Verwendung der erfindungsgemäßen wäßrigen Farbstoffpräparationen hergestellten lösungsmittelfreien Druckfarben sind vorteilhaft geeignet für die Beschichtung von Folien, z.B. Aluminiumfolien oder Polyesterfolien. Insbesondere sind Aluminiumfolien für die Zigarettenindustrie zu nennen. Die so bedruckten Folien weisen gute Gebrauchseigenschaften auf.

Die folgenden Beispiele sollen die Erfindung näher erläutern.

### Beispiel 1

3 g C.I. Solvent Yellow 82 und 7 g C.I. Solvent Orange 54 wurden bei 95°C in 100 g eines Umsetzungsprodukts von 35 mol Ethylenoxid und 1 mol Ricinusöl gelöst. Nach dem Abkühlen war die Farbstoffpräparation sofort gebrauchsfertig.

### Beispiel 2

10 g C.I. Solvent Red 119 wurden bei 95°C in 100 g eines Umsetzungsprodukts von 35 mol Ethylenoxid und 1 mol Ricinusöl gelöst. Nach dem Abkühlen war die Farbstoffpräparation sofort gebrauchsfertig.

### Beispiel 3

a) 5 g der in Beispiel 1 beschriebenen Farbstoffpräparation wurden in 10 g Wasser eingerührt. Die wäßrige Farbstoffpräparation war sofort gebrauchsfertig.
b) 15 g der unter a) beschriebenen wäßrigen Farbstoffpräparation wurden mit 90 g eines Bindemittels auf Basis eines wasserlöslichen Polyurethans gemischt. Die resultierende Druckfarbe wurde mit einer Rakel (12 µm, 24 µm, 36 µm) auf Aluminiumfolie abgezogen. Nach dem Trocknen erhielt man jeweils eine goldfarben bedruckte Aluminiumfolie mit guten Gebrauchseigenschaften.

### Beispiel 4

30 g der in Beispiel 2 beschriebenen Farbstoffpräparation wurden bei Raumtemperatur mit 100 kg eines Düngemittels (in Granulatform) in einem Mischer intensiv vermischt. Man erhielt gleichmäßig rot eingefärbtes Düngemittel.

### Beispiel 5

a) 5 g der in Beispiel 2 beschriebenen Farbstoffpräparation wurden in 20 g Wasser eingerührt. Die wäßrige Farbstoffpräparation war sofort gebrauchsfertig.
b) 25 g der unter a) beschriebenen wäßrigen Farbstoffpräparation wurden mit 80 g eines Bindemittels auf Basis eines wasserlöslichen Polyurethans gemischt. Die resultierende Druckfarbe wurde mit einer 36 µm-Rakel auf Polyesterfolie abgezogen. Nach dem Trocknen erhielt man eine rot bedruckte Polyesterfolie mit guten Gebrauchseigenschaften.

## Patentansprüche

1. Farbstoffpräparationen, enthaltend, jeweils bezogen auf das Gewicht der Präparation, 0,01 bis 50 Gew.-% eines oder mehrerer Farbstoffe, die keine wasserlöslichmachenden Gruppen im Molekül aufweisen und aus der Klasse der Metallkomplex-Azofarbstoffe oder der Metallphthalocyanine stammen, und 50 bis 99,99 Gew.-% eines Umsetzungsprodukts von 1 bis 50 mol Ethylenoxid und 1 mol Ricinusöl.

2. Farbstoffpräparationen nach Anspruch 1, enthaltend, jeweils bezogen auf das Gewicht der Präparation, 1 bis 30 Gew.-% Farbstoff und 70 bis 99 Gew.-% Umsetzungsprodukt von Ethylenoxid und Ricinusöl.

3. Farbstoffpräparationen nach Anspruch 1, enthaltend einen oder mehrere Metallkomplex-Azofarbstoffe.

4. Farbstoffpräparationen nach Anspruch 1, enthaltend ein Umsetzungsprodukt von 10 bis 40 mol Ethylenoxid und 1 mol Ricinusöl.

5. Farbstoffpräparationen nach Anspruch 1, enthaltend einen oder mehrere Chromkomplex-Azofarbstoffe.

6. Farbstoffpräparationen nach Anspruch 1, enthaltend ein Umsetzungsprodukt von 35 mol Ethylenoxid und 1 mol Ricinusöl.

7. Wäßrige Farbstoffpräparationen, enthaltend, jeweils bezogen auf das Gewicht der Präparation, 1 bis 50 Gew.-% der Farbstoffpräparation gemäß Anspruch 1 und 50 bis 99 Gew.-% Wasser.

8. Wäßrige Farbstoffpräparationen nach Anspruch 7, enthaltend, jeweils bezogen auf das Gewicht der Präparation, 1 bis 40 Gew.-% der Farbstotfpräparation gemäß Anspruch 1 und 60 bis 99 Gew.-% Wasser.

9. Verwendung der Farbstoffpräparationen gemäß Anspruch 1 zum Färben von körnigen oder pulvrigen Substraten.

10. Verwendung der wäßrigen Farbstoffpräparationen gemäß Anspruch 7 in Druckfarben.
